# EUROPÄISCHE PATENTSCHRIFT

(11) **EP 3 580 115 B1**
(45) Veröffentlichungstag und Bekanntmachung des Hinweises auf die Patenterteilung: **10.03.2021**
(21) Anmeldenummer: 18704411.0
(22) Anmeldetag: 17.01.2018
(51) Int. Cl.: B62D 1/06

(54) **VERFAHREN UND WERKZEUG ZUM EINBRINGEN VON ELEKTRISCHEN LEITERN IN EINE UMSCHÄUMUNG EINES LENKRADSKELETTS, UND FAHRZEUGLENKRAD**
METHOD AND TOOL FOR INTRODUCING ELECTRIC CONDUCTORS INTO AN OVERMOULDING OF A STEERING WHEEL FRAME
PROCÉDÉ ET OUTIL POUR INTRODUIRE DES CONDUCTEURS ÉLECTRIQUES DANS UNE MOUSSE D'UN SQUELETTE DE VOLANT, ET VOLANT DE VÉHICULE

(30) Priorität: 08.02.2017 DE 102017102460
(43) Veröffentlichungstag der Anmeldung: 18.12.2019
(73) Patentinhaber: ZF Automotive Safety Germany GmbH, 63743 Aschaffenburg (DE)
(72) Erfinder: LAMMERS, Alexander, 64367 Mühltal (DE); LIND, Thomas, 97794 Rieneck (DE)
(74) Vertreter: ZF Patentabteilung - DIPS
(86) Internationale Anmeldenummer: PCT/EP2018/051079
(87) Internationale Veröffentlichungsnummer: WO 2018/145868

(56) Entgegenhaltungen:
- EP-A1- 2 842 831
- WO-A1-2015/055172
- WO-A2-2016/071002
- JP-A- 2013 237 310
- US-A1- 2013 056 455

## Beschreibung

Die Erfindung betrifft ein Verfahren und ein Werkzeug zum Einbringen von elektrischen Leitern in eine Umschäumung eines Lenkradskeletts. Die Erfindung betrifft darüber hinaus auch ein Fahrzeuglenkrad mit eingebrachten elektrischen Leitern.

Aus Komfortgründen weisen Fahrzeuglenkräder häufig eine Lenkradheizung auf, die einen oder mehrere im Lenkradkranz und/oder in den Lenkradspeichen des Fahrzeuglenkrads angeordnete elektrische Heizdrähte umfasst. Darüber hinaus verfügen moderne Fahrzeuglenkräder häufig über Sensoren, um zu erfassen, ob ein Fahrer gerade mindestens eine Hand am Fahrzeuglenkrad hat. Solche Sensoren zur Handerkennung, auch HOD-Sensoren (Hands-On-Detection) genannt, umfassen Sensordrähte, die im Fahrzeuglenkrad angeordnet sind.

Eine Möglichkeit, ein Fahrzeuglenkrad mit einer Lenkradheizung und/oder mit Sensoren zur Handerkennung herzustellen, besteht darin, Matten, die elektrische Heizdrähte und/oder Sensordrähte umfassen, auf dem Lenkradkranz und/oder den Lenkradspeichen anzuordnen. Diese können beispielsweise auf der Umschäumung festgeklebt werden.

Eine alternative Möglichkeit ist aus der DE 10 2013 017 319 A1 bekannt. Darin wird ein Verfahren beschrieben, bei dem ein Heizdraht direkt in eine das Skelett umgebende Umschäumung eines Fahrzeuglenkrads eingebracht wird. Dafür wird in die Umschäumung ein Schnitt eingebracht, in den ein Heiz- und/oder Sensordraht eingelegt wird. Danach schließt sich der Schnitt aufgrund der Eigenelastizität der Umschäumung und fixiert dadurch den Heizdraht in seiner Position. Vorzugsweise erfolgt bei diesem Verfahren das Einbringen des Schnitts und das Positionieren des Heizdrahts in einem gemeinsamen Arbeitsschritt, sodass dieses Verfahren sehr effizient und schnell ist. Darüber hinaus wird bei diesem Verfahren kein Material abgetragen.

Bei derzeit aktuellen Konzepten zum Heizen eines Fahrzeuglenkrads und zur Erfassung einer Lenkradberührung, wie sie beispielsweise aus der US 2015/0336601 A1 bekannt sind, sind zwischen einer das Lenkradskelett umgebenden Umschäumung und einer äußeren Hülle eine Heizmatte, eine Abschirmmatte und eine Sensormatte vorgesehen, die jeweils ein elektrisch leitendes Drahtgeflecht oder dergleichen (Matte, Band etc.) enthalten. An die Abschirmmatte wird eine definierte Spannung angelegt, um eine Abschirmung des Systems gegen das metallische Lenkradskelett zu erreichen. Der Heizbetrieb und die Hand(berührungs)erkennung erfolgen alternierend in jeweils sehr kurzen Zeitintervallen. Der Heizstrom und der Abschirmstrom können von derselben oder von unterschiedlichen Stromquellen bereitgestellt werden. Nahe beieinanderliegende elektrische Leitungen des Handberührungssensorsystems können isoliert und zusätzlich von einer Abschirmung umgeben sein, damit sich die übertragenen Signale nicht gegenseitig stören.

Auch aus anderen Gründen kann über der Heizlage, genauer gesagt zwischen der Heizlage und der Sensorlage, eine aktive Abschirm-Lage (sogenanntes "Guard-Layer") vorgesehen sein. Im Gegensatz zu einer passiven Abschirmung, die auf Masse liegt, kann das Guard-Layer während des Heiz- und Berührungserfassungsbetriebs auf ein vorgegebenes elektrisches Potential gelegt werden, das zeit- und/oder situationsabhängig variiert wird. Mit dem Guard-Layer können so bewusst und gezielt die Bedingungen der Messungen zur Erfassung einer Lenkradberührung beeinflusst werden. Grund für ein solches Vorgehen ist, dass die Heizlage mit hohen Strömen beaufschlagt wird und ohne die Verwendung des Guard-Layers keine eindeutigen kapazitiven Messungen in der Sensorlage möglich sind.

In diesem Zusammenhang stehen auch die Forderungen, einen möglichst großen Abstand zwischen dem Guard-Layer und der Sensorlage vorzusehen und das Guard-Layer engmaschiger, also mit einer höheren Drahtdichte, als die Sensorlage auszubilden.

Ein solcher Aufbau mit drei Lagen (Heizlage, Guard-Layer und Sensorlage) erfordert sehr viel Bauraum. Darüber hinaus ist zu beachten, dass im Falle einer gewünschten harten Haptik im Lenkradkranz eine ansonsten übliche Mattenapplikation unter der äußeren (Leder-)Hülle nicht möglich ist. Eine mögliche Alternative hierzu besteht darin, eine kombinierte Heiz-/Guardmatte, z.B. in Form eines dünnen Gittertülls, auf das sowohl die Drähte der Heizlage als auch des Guard-Layers gestickt sind, einzuschäumen (erster Schuss) und in eine weitere, äußere Schäumung (zweiter Schuss) die Sensorlage einzubringen, beispielsweise mit dem aus der DE 10 2013 017 319 A1 bekannten Verfahren. Da die Heizlage in der inneren Schäumung (erster Schuss) weit entfernt von der äußeren Lenkradhülle angeordnet ist, ist jedoch die Effektivität der Wärmeübertragung an die äußere Lenkradhülle vermindert.

Abgesehen von den bereits genannten Nachteilen sind die oben beschriebenen Lösungen noch mit weiteren Schwierigkeiten verbunden. So ist das Doppelschäumen (erster und zweiter Schuss) speziell im Kranzbereich des Lenkrads mit hohen Toleranzen behaftet. Außerdem erfordert das manuelle Aufbringen der kombinierten Heiz-/Guardmatte ein hohes handwerkliches Geschick, und jede Falte in deren Trägermaterial - bedingt durch die starken Rundungen im Kranz - hat Einfluss auf die Qualität der darauf applizierten äußeren Schäumung (zweiter Schuss der Doppelschäumung). Des Weiteren sind Herstellung und Verwendung der kombinierten Heiz-/Guardmatte mit einem hohen Arbeits- und Kostenaufwand dahingehend verbunden, den Kupferdraht wie gewünscht auf dem Lenkradkranz zu positionieren (Sticken, Trägermaterial, Stickfaden, Klebefolien, Release-Papier, NTC (negative temperature coefficient) als Temperatursensor, Befestigungs-Klebeband für NTC, Transport der Matten und manuelles Applizieren der Matten), was letztlich nicht in einem Mehrwert des Endprodukts resultiert. Das Dokument WO2015/055172 A1, das als nächstliegender Stand der Technik betrachtet wird, offenbart Verfahren, ein Werkzeug und ein Lenkrad gemäß dem Oberbegriff der unabhängigen Ansprüche.

Aufgabe der Erfindung ist es, die oben erläuterten Nachteile und Schwierigkeiten zu überwinden und insbesondere bei Lenkrädern mit harter Haptik ein kostengünstiges Verfahren für die Lenkradherstellung anzugeben, das effektiv beheizt und dessen Berührung von der Fahrzeug-Elektronik zuverlässig erfasst werden kann.

Gelöst wird diese Aufgabe durch ein Verfahren zum Einbringen von elektrischen Leitern in eine Umschäumung eines Lenkradskeletts mit den Merkmalen des Anspruchs 1 sowie durch ein Werkzeug zum Einbringen von elektrischen Leitern in eine Umschäumung eines Lenkradskeletts mit den Merkmalen des Anspruchs 8. Vorteilhafte und zweckmäßige Ausgestaltungen des erfindungsgemäßen Verfahrens und des erfindungsgemäßen Werkzeugs sind in den zugehörigen Unteransprüchen angegeben.

Das erfindungsgemäße Verfahren zum Einbringen von elektrischen Leitern in eine Umschäumung eines Lenkradskeletts, welche insbesondere zum Heizen, zum Abschirmen und zum Erfassen einer Lenkradberührung genutzt werden, umfasst folgende Schritte: Einbringen zumindest eines Schnittes in die Umschäumung mittels eines Schneidwerkzeugs in einem ersten Verfahrensschritt, und gleichzeitiges Einbringen sowohl einer ersten Lage eines elektrischen Leiters als auch einer zweiten Lage eines elektrischen Leiters in den erzeugten Schnitt in einem zweiten Verfahrensschritt. Vorzugsweise bildet die erste Lage sowohl eine Heizlage zum Beheizen des Lenkrads als auch ein Guard-Layer, das zusammen mit der als Sensorlage dienenden zweiten Lage eine kapazitive Erfassung von Handberührungen ermöglicht.

Die Erfindung beruht zum einen auf der Erkenntnis, dass das für das Heizen und die Erfassung einer Lenkradberührung verantwortliche Steuergerät so eingerichtet werden kann, dass eine innere erste Lage eines ersten elektrischen Leiters (nachfolgend der Einfachheit halber als "erste Lage" bezeichnet) wahlweise sowohl als Heizlage als auch als Guard-Layer genutzt werden kann. Eine äußere zweite Lage eines zweiten elektrischen Leiters (nachfolgend der Einfachheit halber als "zweite Lage" bezeichnet) bildet die Sensorlage. Eine weitere Lage eines elektrischen Leiters wird für die beiden gewünschten Funktionen (i) Beheizen des Fahrzeuglenkrads und (ii) Erfassen einer Lenkradberührung nicht benötigt. Ein solcher zweilagiger Aufbau ist deutlich platzsparender als ein dreilagiger Aufbau mit separatem Guard-Layer.

Das Steuergerät ist im Fall des erfindungsgemäßen zweilagigen Aufbaus so programmiert, dass es die erste Lage alternierend (i) mit einem hohen Heizstrom von mehreren Ampere beaufschlagt (Heizbetrieb) und (ii) auf ein (variierendes) Abschirmpotential gelegt wird (Handberührungserkennung), d.h. Heizbetrieb und Handberührungserkennung wechseln sich in sehr kurzen Zeitintervallen mit Periodendauern im Millisekundenbereich ab. Wenn die Lenkradheizung deaktiviert ist, wird die erste Lage ausschließlich als Guard-Layer genutzt.

Die Erfindung beruht zum anderen auf der Erkenntnis, dass es technisch möglich ist, in einem automatisierten Prozess zwei elektrische Leiter gleichzeitig in eine Umschäumung eines Lenkradskeletts einzubringen. Es können also die gemäß der ersten Erkenntnis für die gewünschten Funktionalitäten ausreichenden zwei Lagen von elektrischen Leitern im selben Verfahrensschritt eingebracht werden.

Das erfindungsgemäße Einlegen zweier Lagen von elektrischen Leitern in einem einzigen Prozessschritt reduziert vor allem den Herstellungsaufwand erheblich. Aber auch in technischer Hinsicht und im Hinblick auf die Qualität hat das erfindungsgemäße Verfahren Vorteile. So erlaubt es das erfindungsgemäße Verfahren - abgesehen von der bereits erwähnten Einsparung von Bauraum - die u.a. als Heizlage dienende erste Lage näher an der Lenkradoberfläche zu positionieren, sodass die im ersten elektrischen Leiter erzeugte Wärme effektiver genutzt werden kann. Dies gilt insbesondere im Vergleich zu der eingangs beschriebenen Technik, bei der eine Doppelschäumung vorgenommen wird. Außerdem hat das erfindungsgemäße Verfahren gegenüber dieser Technik den Vorteil, dass insbesondere der elektrische Leiter der tieferen ersten Lage präziser verlegt wird, d.h. die Abweichung von einer vorgegebenen Solltiefe ist geringer.

Wie bereits erläutert sollen die beiden Lagen der elektrischen Leiter in unterschiedlichen Tiefen (bezogen auf die Oberfläche der Umschäumung) eingebracht werden. Insbesondere soll die als Heizlage und Guard-Layer dienende erste Lage tiefer in die Umschäumung eingebracht werden als die zweite Lage, die als Sensorlage dient.

Bevorzugt werden die erste Lage und die zweite Lage in einem Abstand von 0 bis 3 mm, vorzugsweise von 0,8 bis 1,5 mm, voneinander eingebracht.

Damit bei der Durchführung des Verfahrens an dem für das Einbringen der elektrischen Leiter verwendeten Werkzeug auf eine aufwendige Verstelleinrichtung verzichtet werden kann, werden die erste Lage und die zweite Lage bevorzugt in einem gleichbleibenden Abstand voneinander eingebracht. Das bedeutet, dass der elektrische Leiter der ersten Lage im Wesentlichen parallel zum elektrischen Leiter der zweiten Lage verläuft. Unter Umständen ist die Positionierung der Lagen beim Einbringen der elektrischen Leiter toleranzbehaftet, sodass der Abstand zwischen den beiden Lagen minimal schwanken kann. Sollten sich diese Toleranzen auf die Sensorsignale auswirken, kann dies über die Elektronik berücksichtigt und ausgeglichen werden.

Für eine möglichst effektive Nutzung der Heizleistung sollte die erste Lage in einer Tiefe von maximal 4 mm, vorzugsweise maximal 2,5 mm eingebracht werden.

Für eine möglichst zuverlässige Handberührungserkennung sollte die zweite Lage in eine Tiefe von 0 bis 1,5 mm, vorzugsweise etwa 1,0 mm eingebracht werden.

Der Schnitt und das Einbringen der ersten Lage und der zweiten Lage der elektrischen Leiter erfolgen vorzugsweise mittels eines Werkzeugs, das auf einem wenigstens 3-achsigen, vorzugsweise 6-achsigen, frei programmierbaren Industrieroboter montiert ist, der das Werkzeug bewegt. Mit einem solchen Industrieroboter ist eine freie Wahl der Schnittführung möglich. Aufgrund der großen Genauigkeit solcher Industrieroboter ist zudem eine zuverlässige und gleichmäßige Schnittführung gewährleistet.

Um auch komplexere Schnittführungen zu ermöglichen, kann zusätzlich oder optional auch das Lenkradskelett auf einem zweiten wenigstens 3-achsigen, vorzugsweise 6-achsigen, frei programmierbaren Industrieroboter gehalten sein, der das Lenkradskelett relativ zum Werkzeug bewegt.

Im Übrigen wird die obengenannte Aufgabe auch gelöst durch ein Verfahren zum Beheizen eines Fahrzeuglenkrads und zum Erfassen einer Lenkradberührung, wobei in eine Umschäumung eines Lenkradkranzes ein erster elektrischer Leiter, der eine innere erste Lage bildet, sowie ein zweiter elektrischer Leiter, der eine äußere zweite Lage bildet, eingebracht ist, mit folgenden Schritten:
- der erste elektrische Leiter (22) wird in einem Heizbetrieb des Fahrzeuglenkrads (10) mit einem Heizstrom von mehreren Ampere beaufschlagt und in einem Sensorbetrieb des Fahrzeuglenkrads (10) auf ein vorgegebenes Potential zur aktiven Abschirmung der zweiten Lage (22b) gelegt;
- der zweite elektrische Leiter (22) wird im Sensorbetrieb des Fahrzeuglenkrads (10) als Sensorlage zur kapazitiven Erfassung von Handberührungen genutzt; und
- zumindest der erste elektrische Leiter wird abwechselnd in den Heizbetrieb und den Sensorbetrieb geschaltet, insbesondere wobei die Zeitintervalle des Heizbetriebs und des Sensorbetriebs Periodendauern von weniger als einer Zehntelsekunde aufweisen.

Gelöst wird die Aufgabe der Erfindung auch durch ein Werkzeug zum Einbringen von elektrischen Leitern in eine Umschäumung eines Lenkradskeletts, das insbesondere zur Durchführung des zuvor beschriebenen Verfahrens geeignet ist. Das Werkzeug umfasst ein Schneidwerkzeug mit einer Schneideinrichtung, die eine in Schnittrichtung weisende Schneidkante aufweist. Das Werkzeug umfasst ferner ein Einführwerkzeug für die elektrischen Leiter. Das Schneidwerkzeug und das Einführwerkzeug sind miteinander gekoppelt, und das Einführwerkzeug schließt sich entgegen der Schnittrichtung, vorzugsweise unmittelbar, an die Schneideinrichtung an. Gemäß der Erfindung weist das Einführwerkzeug wenigstens einen ersten Einführkanal auf, durch den ein erster elektrischer Leiter zur Ausbildung einer ersten Lage geführt werden kann, und einen zweiten Einführkanal, durch den gleichzeitig ein zweiter elektrischer Leiter zur Ausbildung einer zweiten Lage geführt werden kann.

Das erfindungsgemäße Werkzeug ermöglicht durch Automatisierung einen einfachen und robusten Arbeitsprozess.

Die wenigstens zwei Einführkanäle des Einführwerkzeugs können durch geeignete Röhrchen definiert sein, die eine präzise Führung der einzubringenden elektrischen Leiter erlauben.

Vorzugsweise enden die Einführkanäle in Schnittrichtung hinter der Schneideinrichtung des Schneidwerkzeugs, sodass die elektrischen Leiter widerstandsarm in den Schnitt eingebracht werden. Da die elektrischen Leiter nicht mit den Schnitträndern in Anlage kommen können, ist zudem eine Beschädigung der Schnittränder durch die elektrischen Leiter zuverlässig ausgeschlossen.

Zur Steuerung einer Schnitttiefe können ein taktiles Positionierwerkzeug und/ oder eine berührungslose Sensorsteuerung vorgesehen sein. Auf diese Weise können Maßtoleranzen der Umschäumung ohne nennenswerten Einfluss auf eine vorgegebene, gewünschte Schnitttiefe kompensiert werden.

Die Erfindung schafft auch ein Fahrzeuglenkrad mit einem Lenkradskelett, einem Lenkradkranz, der mit einer Umschäumung umschäumt ist, und wenigstens zwei Lagen von elektrischen Leitern, wobei in der Umschäumung wenigstens ein Schnitt eingebracht ist, in dem die wenigstens zwei Lagen von elektrischen Leiter liegen. Vorzugsweise sind die wenigstens zwei Lagen durch das erfindungsgemäße Verfahren in die Umschäumung des Lenkradskeletts eingebracht.

Gemäß einer Ausführungsform des Fahrzeuglenkrads weist der Schnitt Kreuzungspunkte von Abschnitten des Schnitts auf, wobei im Bereich der Kreuzungspunkte einer der sich kreuzenden Abschnitte des Schnittes eine größere Tiefe aufweist und die beiden Lagen von elektrischen Leitern in diesem Abschnitt des Schnittes tiefer eingelegt sind als die beiden Lagen von elektrischen Leitern im darüberliegenden Abschnitt. Derartige Kreuzungspunkte sind insbesondere im Bereich eines elektrischen Anschlusses vorgesehen, um die Leiterenden mit geringem Aufwand möglichst kompakt an das Stromnetz und/oder ein Steuergerät des Fahrzeugs anzubinden.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine perspektivische Ansicht eines erfindungsgemäßen Fahrzeuglenkrads hergestellt nach dem erfindungsgemäßen Verfahren mit in die Umschäumung eingebrachten elektrischen Leitern;
- Figuren 2a und 2b Detailansichten des Fahrzeuglenkrads aus Figur 1 im Bereich einer Lenkradspeiche;
- Figur 3 eine schematische Detailansicht eines Radialschnitts durch den Lenkradkranz eines nicht zur Erfindung gehörenden Fahrzeuglenkrads;
- Figur 4 einen Radialschnitt durch eine Ausführungsform eines Lenkradkranzes eines erfindungsgemäßen Fahrzeuglenkrads; und
- Figuren 5a und 5b eine Seitenansicht sowie eine geschnittene Seitenansicht eines erfindungsgemäßen Werkzeugs zum Einbringen von elektrischen Leitern in das Fahrzeuglenkrad aus Figur 1.

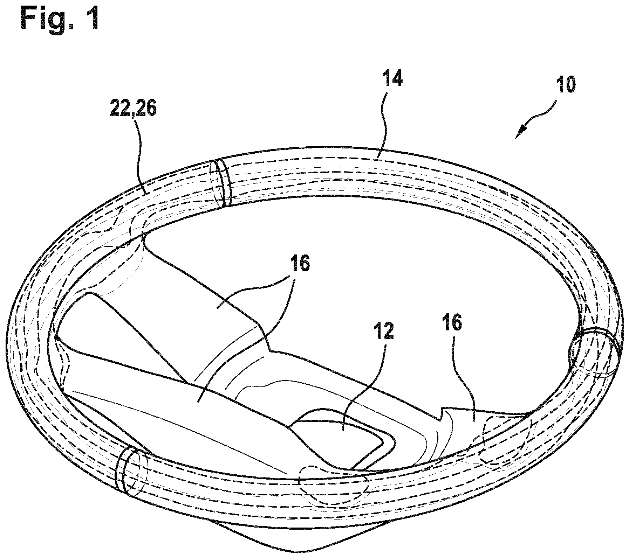

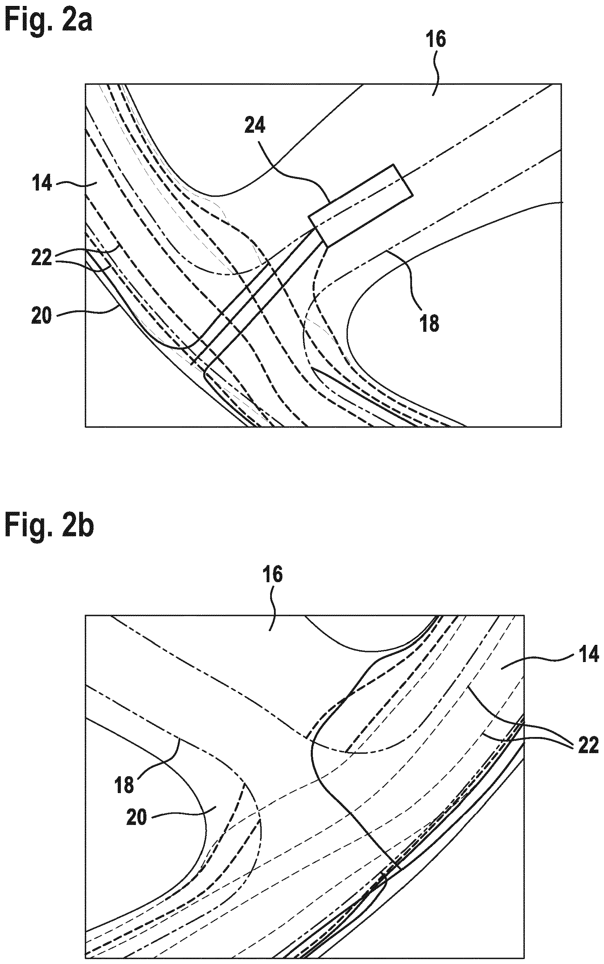

In Figur 1 ist ein Fahrzeuglenkrad 10 mit einer Lenkradnabe 12, einem Lenkradkranz 14 sowie mehreren Speichen 16, die die Lenkradnabe 12 und den Lenkradkranz 14 miteinander verbinden, gezeigt. Wie in den Figuren 2a und 2b zu sehen ist, hat das Fahrzeuglenkrad 10 ein Lenkradskelett 18 aus einem harten Material (vorzugsweise einer Leichtmetalllegierung) sowie eine einzige Umschäumung 20 die das Lenkradskelett 18 zumindest im Bereich des Lenkradkranzes 14 außenseitig vollständig umschließt. Die Umschäumung 20 sorgt für eine "harte" Haptik und hat bevorzugt eine Shore L Härte im Bereich von 40 bis 100, wobei 75 +/- 5 ein typischer Wert ist. Als Material eignet sich zum Beispiel Polyurethanschaum (PUR) oder als zusätzliche Deckschicht ein EPDM (Ethylen Propylen Dien Kautschuk) zwischen einer PUR-Lenkradumschäumung und zum Beispiel einer Lederoberfläche des Fahrzeuglenkrads 10.

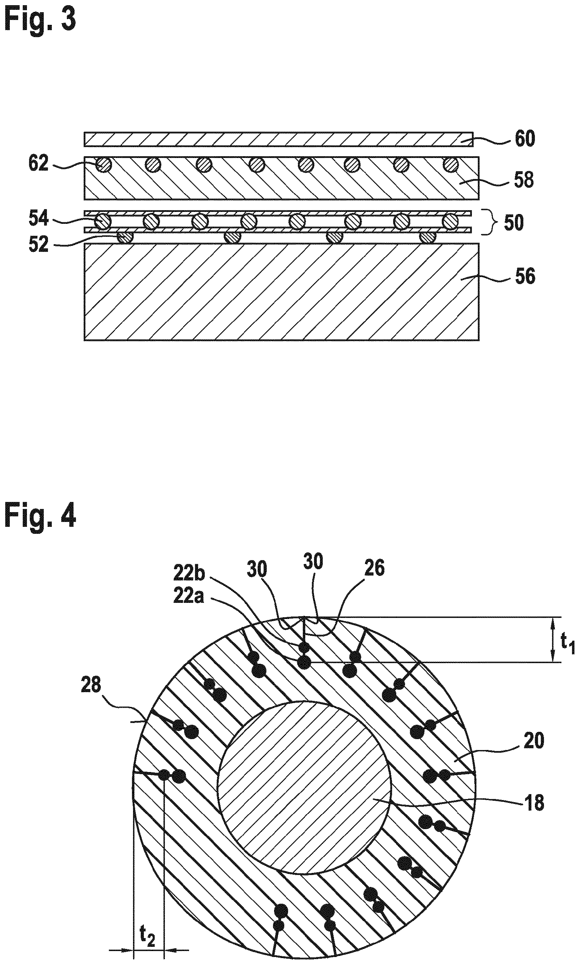

In der Umschäumung 20 sind mehrere elektrische Leiter 22 vorgesehen, die mit einem an einer Speiche 16 angeordneten Anschluss 24 (siehe Figur 2a) mit dem Stromnetz bzw. einem Steuergerät des Fahrzeugs verbunden sind. Die elektrischen Leiter 22, bevorzugt Kupfer-Lackdrähte, sind in zwei voneinander beabstandeten Lagen 22a, 22b in die Umschäumung 20 eingebracht (siehe Figur 4). Die innere, das heißt dem Lenkradskelett 18 nähere, erste Lage 22a bildet funktional sowohl eine Heizlage als auch eine aktive Abschirmlage (Guard-Layer). Die äußere, das heißt vom Lenkradskelett 18 weiter entfernte, zweite Lage 22b bildet eine Sensorlage. Wie eingangs beschrieben, lässt sich die erste Lage 22a in ihrer Funktion als Heizlage durch Bestromung aufheizen, um das Fahrzeuglenkrad 10, insbesondere den Lenkradkranz 14, zu erwärmen, während dieselbe erste Lage 22a in ihrer Funktion als Guard-Layer zusammen mit der zweiten Lage 22b (Sensorlage) für die kapazitive Erfassung von Lenkradberührungen verwendet wird.

Wie in Figur 1 zu sehen ist, sind Schnitte 26 in der Umschäumung 20, in denen die elektrischen Leiter 22 eingebracht sind, längs des Lenkradkranzes 14 kreisförmig um die Lenkradnabe 12 herum geführt. Es können mehrere kreisförmige Schnitte 26 vorhanden sein, die im Wesentlichen parallel zueinander verlaufen, oder einer oder mehrere dieser Schnitte können auch in mehreren Umläufen um die Lenkradnabe 12 längs des Lenkradkranzes 14 mit geringfügigem Abstand voneinander geführt werden, sodass ein im Wesentlichen spiralförmiger Schnitt 26 erzeugt wird. Wenn der elektrische Leiter 22 in diesen spiralförmigen Schnitt 26 eingelegt wird, verläuft er in mehreren Wicklungen. Natürlich ist es von Vorteil, wenn an den Stellen, an denen eine höhere Heizleistung erforderlich ist, Schnitte näher aneinander liegen. Wenigstens ein Schnitt 26 kann im Bereich des Anschlusses 24 Kreuzungspunkte von Abschnitten des Schnitts 26 aufweisen, wobei im Bereich der Kreuzungspunkte einer der sich kreuzenden Abschnitte des Schnitts 26 eine größere Tiefe aufweist und die beiden Lagen 22a, 22b von elektrischen Leitern 22 in diesem Abschnitt des Schnitts 26 tiefer eingelegt sind als die beiden kreuzenden Lagen 22a, 22b der Leiter 22 im darüberliegenden Abschnitt. Auf diese Weise lassen sich entgegengesetzte Enden der elektrischen Leiter 22 besonders einfach an das Stromnetz des Fahrzeugs anschließen.

Durch das im Folgenden noch näher beschriebene Verfahren ist es möglich, sehr flexibel die Heizleistung und die Erfassungsgenauigkeit bzw. Erfassungsempfindlichkeit lokal anzupassen, indem ganz einfach engere und mehr Schnitte oder engere Umläufe eines spiralförmigen Schnittes erzeugt werden. Das entsprechende Werkzeug selbst muss nur umprogrammiert werden, um einen anderen Schnittverlauf durchzuführen.

In Figur 3 ist ein Detail eines Radialschnitts durch einen Lenkradkranz eines nicht-erfindungsgemäßen Fahrzeuglenkrads als Konzeptskizze gezeigt. Eine kombinierte Heiz-/Guardmatte 50, zum Beispiel in Form eines dünnen Gittertülls, auf das sowohl Drähte einer Heizlage 52 als auch Drähte eines Guard-Layers 54 gestickt sind, ist in eine erste, innere Schäumung 56 eingeschäumt. In eine weitere, 2 bis 3 mm starke äußere Schäumung 58, die wiederum von einer Ummantelung 60 umgeben ist, sind Drähte einer Sensorlage 62 eingebracht.

Dagegen ist bei der erfindungsgemäßen Gestaltung des Lenkradkranzes 14, wie sie beispielhaft in Figur 4 gezeigt ist, nur eine Umschäumung 20 notwendig, die noch von einer (nicht gezeigten) Ummantelung, beispielsweise aus Leder oder Kunstleder, umgeben sein kann. Auch eine Matte ist hier nicht vorgesehen. Wie in Figur 4 schematisch zu sehen ist, sind in die Umschäumung 20 ein oder mehrere Schnitte 26 eingebracht, die von der Oberfläche 28 der Umschäumung 20 im Wesentlichen radial nach innen geführt sind. Die elektrischen Leiter 22 sind in zwei Lagen 22a, 22b in diese Schnitte 26 eingebracht.

Die erste Lage 22a ist in einer Tiefe t₁ von maximal 4 mm, vorzugsweise maximal 2,5 mm verlegt, während die zweite Lage 22b in einer Tiefe t₂ zwischen 0 und 1,5 mm verlegt ist. Der Abstand t₁ - t₂ zwischen den beiden Lagen 22a, 22b ist im Rahmen unvermeidbarer Toleranzen beim Einbringen der elektrischen Leiter 22 konstant. Folglich verlaufen die beiden Lagen 22a, 22b im Wesentlichen parallel zueinander wobei der Abstand zwischen 0 und etwa 3 mm, vorzugsweise 0,8 bis 1,5 mm beträgt.

Wie bereits beschrieben bildet die tiefere erste Lage 22a eine bestrombare Heizlage zum Beheizen des Fahrzeuglenkrads 10 und ein Guard-Layer, während die darüber liegende zweite Lage 22b eine Sensorlage bildet, welche zusammen mit dem auf geeignetes Potential gelegten Guard-Layer zur Erfassung von Handberührungen genutzt wird.

Das Material der Umschäumung 20 ist insgesamt elastisch, sodass die Schnittränder 30 des Schnittes 26 nach dem Einlegen der elektrischen Leiter 22 bzw. dem Einbringen des Schnittes 26 in eine Ausgangsposition zurückfedern, in der die Schnittränder 30 aneinander anliegen. Die elektrischen Leiter 22 sind so zuverlässig in der Position in der Umschäumung 20 gehalten und vor einem Herausfallen geschützt.

Im Übrigen umfasst der elektrische Leiter 22 bevorzugt wenigstens einen Draht, der von einem Thermoplast ummantelt ist. Nach dem Einlegen des elektrischen Leiters 22 in die Umschäumung 20 kann der wenigstens eine Draht so stark erhitzt werden, dass der ummantelnde Thermoplast sowie die PUR-Umschäumung 20 an den Rändern des Schnittes 26 schmilzt. Der wenigstens eine Draht wird dabei durch den Thermoplast in der PUR-Umschäumung 20 verklebt. Ferner schließt sich ein Spalt am Schnitt 26, weil der Schmelzvorgang die PUR-Umschäumung 20 entspannt und Freiraum für den wenigstens einen Draht schafft.

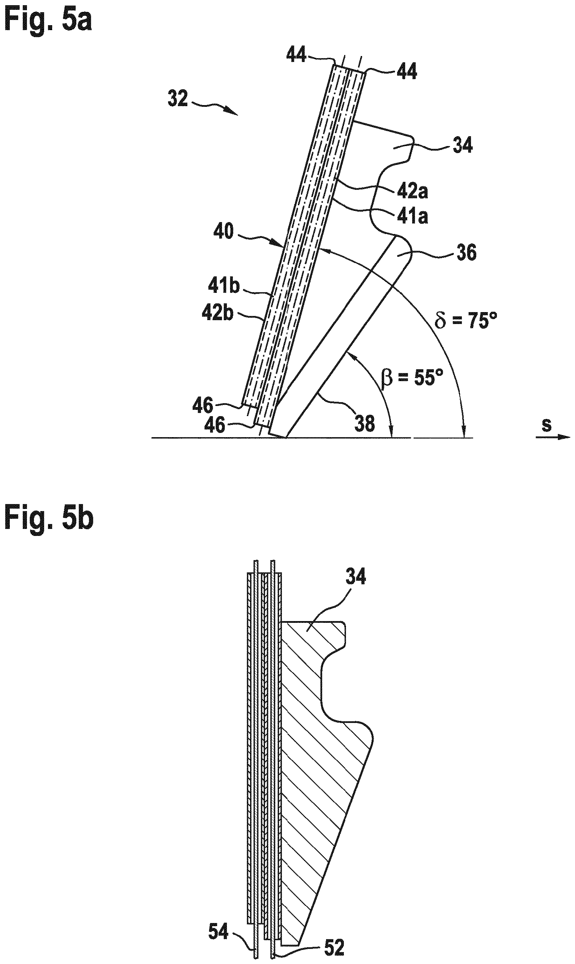

In den Figuren 5a und 5b ist ein erfindungsgemäßes Werkzeug 32 zur Vereinfachung des Einbringens von solchen elektrischen Leitern 22 in eine Umschäumung 20 eines Lenkradskeletts 18 in zwei verschiedenen Ausrichtungen gezeigt. Das Werkzeug 32 hat ein Schneidwerkzeug 34 mit einer Schneideinrichtung 36, die in dieser Ausführungsform durch eine Klinge gebildet ist. Die Schneideinrichtung 36 weist eine in Schnittrichtung S weisende V-förmige Schneidkante 38 mit einem Keilwinkel von 30° bis 40°, bevorzugt ca. 35° auf.

Rückseitig an die Schneidkante 38 unmittelbar anschließend ist ein Einführwerkzeug 40 vorgesehen, das zwei durch zwei Röhrchen 41a, 41b definierte Einführkanäle 42a, 42b aufweist. Die Einführkanäle 42a, 42b sind derart ausgebildet, dass jeweils ein elektrischer Leiter 22 durch diesen durchgeschoben werden kann. Ein erstes Ende 44 jedes Einführkanals 42a, 42b ist so angeordnet, dass sich dieses bei einem Einbringen eines Schnittes 26 in die Umschäumung 20 außerhalb der Umschäumung 20 befindet. Das zweite, gegenüberliegende Ende 46 mündet jeweils in Schnittrichtung S kurz hinter der Schneideinrichtung 36.

Unabhängig von ihrer Form kann die Schneidkante 38 mit verschiedenen Schnittwinkeln β zur Schnittrichtung S in die Umschäumung geführt werden. Der Schnittwinkel β beträgt zwischen 30° und 90°, vorzugsweise zwischen 45° und 75° und in dem gezeigten Ausführungsbeispiel ca. 55°. Ein Winkel δ, in dem die Einführkanäle 42a, 42b zur Schnittrichtung S verlaufen, beträgt hier ca. 75°.

Unabhängig von der Form der Schneideinrichtung 36 bzw. der Schneidkante 38 ist das Einführwerkzeug 40 mit dem Schneidwerkzeug 34 mechanisch fest gekoppelt und so ausgebildet, dass die elektrischen Leiter 22 unabhängig vom Winkel β immer im gleichen Abstand in unterschiedlichen Tiefen in den Schnitt 26 eingebracht werden. Die Eindringtiefen der Einführkanäle 42a, 42b in die Umschäumung können gemeinsam durch die Neigung der Schneideinrichtung 36 und der Einführkanäle 42a, 42b zur Oberfläche 28 der Umschäumung 20 und/oder durch Verstellen der Einführkanäle 42a, 42b relativ zur tiefsten Stelle der Schneidkante 38 eingestellt werden.

Das Schneidwerkzeug 34 kann auch andere Schneideinrichtungen 36 aufweisen, beispielsweise solche mit einem Schneiddraht. Genauso kann das Einführwerkzeug 40 auch anders ausgebildet sein. Es ist lediglich sicherzustellen, dass das Einführwerkzeug 40 mit dem Schneidwerkzeug 34 gekoppelt ist und das Einführwerkzeug 40 entgegen der Schnittrichtung S unmittelbar an die Schneideinrichtung 36 anschließt, um die elektrischen Leiter 22 gleichzeitig mit dem Schnitt 26 in die Umschäumung 20 einzubringen.

Um einen elektrischen Leiter 22 in die Umschäumung 20 eines Lenkradskeletts 18 einzubringen, wird das Werkzeug 32 auf die Oberfläche 28 der Umschäumung 20 aufgesetzt und die Schneidkante 38 in die Umschäumung 20 eingedrückt, bis die gewünschte Schnitttiefe von 0,8 mm bis etwa 4 mm erreicht ist.

Anschließend wird das Werkzeug 32 in Schnittrichtung S durch die Umschäumung 20 bewegt, wodurch ein Schnitt 26 in die Umschäumung 20 eingebracht wird. Gleichzeitig werden durch am Werkzeug 32 vorgesehene Zuführungen die elektrischen Leiter 22 durch die Einführkanäle 42a, 42b jeweils in einem definierten Abstand von der Oberfläche 28 der Umschäumung 20 den Schnitt 26 eingebracht. Vorzugsweise werden die elektrischen Leiter 22 von Vorratsrollen abgewickelt.

Das Einbringen des Schnitts 26 sowie das Einbringen bzw. Einlegen der elektrischen Leiter 22 erfolgen also gleichzeitig, sodass die elektrischen Leiter 22 eingelegt werden, bevor sich die Schnittränder 30 des Schnittes 26 wieder aneinander anlegen können.

Da sich der Schnitt 26 unmittelbar hinter dem Werkzeug 32, also nach dem Einlegen der elektrischen Leiter 22 schließt, sind die elektrischen Leiter 22 sicher im Schnitt 26 gehalten.

Zusätzlich kann der Schnitt 26 aber auch nach dem Einbringen der elektrischen Leiter 22 geschlossen werden, beispielsweise durch Verkleben der Schnittränder 30 und/oder durch zusätzliches Abdecken. Das Abdecken des Schnittes 26 kann beispielsweise durch eine weitere Umschäumung oder eine Ummantelung, beispielsweise aus Leder oder Kunstleder, oder durch ein Dekorelement erfolgen.

Da die elektrischen Leiter 22 über die Einführkanäle 42a, 42b in den Schnitt 26 geführt werden, kommt dieser nicht mit den Schnitträndern 30 in Anlage, sodass zum einen ein widerstandsarmes Einbringen der elektrischen Leiter 22 erfolgt. Zum anderen ist eine Beschädigung der Schnittränder 30 oder der Umschäumung 20 durch die elektrischen Leiter 22 ausgeschlossen.

Bei der hier beschriebenen Ausführungsform entspricht die Breite des Einführwerkzeugs 40 quer zur Schnittrichtung S in etwa der Breite der Schneideinrichtung 36 (könnte jedoch auch kleiner gewählt werden), sodass durch das Einführwerkzeug 40 kein zusätzlicher Widerstand beim Einbringen des Schnittes 26 entsteht. Alternativ kann es in einigen Fällen jedoch auch vorteilhaft sein, die Breite des Einführwerkzeugs 40 größer als die Breite der Schneideinrichtung 36 zu wählen und einen gewissen zusätzlichen Widerstand des Einführwerkzeugs 40 in Kauf zu nehmen.

Die Einbringung in Längsrichtung des Lenkradkranzes 14 bietet den Vorteil, dass der oder die Schnitte 26 mit einem zumindest 3-achsigen, vorzugsweise 6-achsigen frei programmierbaren Industrieroboter, an dem das Werkzeug 32 montiert ist, durchgeführt werden können, ohne dass das Werkzeug 32 abgesetzt werden muss.

Die Tiefe dieser Schnitte 26 kann beispielsweise durch eine entsprechende Steuerung des Industrieroboters bzw. einer Werkzeugbaugruppe mit einem erfindungsgemäßen Werkzeug 32 und einer Baugruppe zum Verschwenken des Werkzeugs 32 überwacht werden.

Es ist aber auch möglich, dass eine solche Werkzeugbaugruppe zusätzlich ein Positionierwerkzeug umfasst, mit dem die Schnitttiefe automatisch eingestellt wird. Hierbei umfasst das Positionierwerkzeug beispielsweise ein gegen die Oberfläche der Umschäumung 20 federbeaufschlagtes Roll- oder Gleitelement, das während des Einbringens der elektrischen Leiter 22 in Kontakt mit der Umschäumung bleibt und eine im Wesentlichen konstante Schnitttiefe sicherstellt. Alternativ ist auch eine berührungslose Einstellung der Schnitttiefe über eine sensorische Abstandsmessung denkbar, wobei die Ansteuerung wenigstens eines programmierbaren Industrieroboters auf Grundlage der Sensordaten so angepasst wird, dass sich stets eine gewünschte Schnitttiefe einstellt.

Außerdem kann insbesondere bei Verwendung einer Klinge diese auch in Ultraschallgeschwindigkeit in Bewegung versetzt werden, um die Schnittqualität zu steigern.

Vorzugsweise erfolgt der Schnitt 26 ohne Materialabtrag der Umschäumung 20, sodass sichergestellt ist, dass sich der Schnitt 26 nach dem Einbringen in die Umschäumung 20 und dem Einlegen der elektrischen Leiter 22 vollständig schließen kann.

Nach dem Verlegen und Anschließen der elektrischen Leiter 22 können diese durch Bestromung so stark erwärmt werden, sodass der angrenzende Bereich der Umschäumung 20 aufgeweicht wird und nach dem Abkühlen mit den elektrischen Leitern 22 verklebt.

Bevorzugt weist jeder elektrische Leiter 22 wenigstens einen Draht auf, der von einem thermoplastischen Überzug umschlossen ist. Beim Bestromen und Erhitzen der elektrischen Leiter 22 werden der Überzug sowie die angrenzende Umschäumung 20 kurzzeitig verflüssigt und/oder aufgeweicht, wobei das geschmolzene Thermoplastmaterial die Umschäumung 20 nach dem Abkühlen besonders gut mit den elektrischen Leitern 22, konkret mit dem wenigstens einen Draht jedes elektrischen Leiters 22 verklebt. Ferner kann durch eine Erwärmung und Verflüssigung des Thermoplastmaterials auch die Schnittkante wieder weitgehend dicht verschlossen und verklebt werden.

## Patentansprüche

1. Verfahren zum Einbringen von elektrischen Leitern (22) in eine Umschäumung (20) eines Lenkradskeletts (18), wobei die elektrischen Leiter (22) insbesondere zum Heizen, zum Abschirmen und zum Erfassen einer Lenkradberührung genutzt werden, mit folgenden Schritten:
- Einbringen zumindest eines Schnittes (26) in die Umschäumung (20) mittels eines Schneidwerkzeugs (34) in einem ersten Verfahrensschritt **dadurch gekennzeichnet, dass** ein
- gleichzeitiges Einbringen sowohl einer ersten Lage (22a) eines elektrischen Leiters (22) als auch einer zweiten Lage (22b) eines elektrischen Leiters (22) in den erzeugten Schnitt (26) in einem zweiten Verfahrensschritt stattfindet.

2. Verfahren nach Anspruch 1, **dadurch gekennzeichnet, dass** die erste Lage (22a) tiefer in die Umschäumung (20) eingebracht wird als die zweite Lage (22b).

3. Verfahren nach Anspruch 1 oder 2, **dadurch gekennzeichnet, dass** die erste Lage (22a) und die zweite Lage (22b) in einem Abstand von 0 bis 3 mm, vorzugsweise 0,8 bis 1,5 mm, voneinander eingebracht werden.

4. Verfahren nach einem der vorhergehenden Ansprüche, **dadurch gekennzeichnet, dass** die erste Lage (22a) und die zweite Lage (22b) in einem im Wesentlichen gleichbleibenden Abstand voneinander eingebracht werden.

5. Verfahren nach einem der vorhergehenden Ansprüche, **dadurch gekennzeichnet, dass** die erste Lage (22a) in eine Tiefe von maximal 4 mm, vorzugsweise maximal 2,5 mm eingebracht wird.

6. Verfahren nach einem der vorhergehenden Ansprüche, **dadurch gekennzeichnet, dass** die zweite Lage (22b) in eine Tiefe von 0 bis 1,5 mm eingebracht wird.

7. Verfahren nach einem der vorhergehenden Ansprüche, **dadurch gekennzeichnet, dass** der Schnitt (26) und das Einbringen der ersten Lage (22a) und der zweiten Lage (22b) der elektrischen Leiter (22) mittels eines Werkzeugs (32) erfolgt, das auf einem wenigstens 3-achsigen, vorzugsweise 6-achsigen, frei programmierbaren Industrieroboter montiert ist, der das Werkzeug (32) bewegt, insbesondere wobei das Lenkradskelett (18) auf einem zweiten wenigstens 3-achsigen, vorzugsweise 6-achsigen, frei programmierbaren Industrieroboter gehalten ist, der das Lenkradskelett (18) relativ zum Werkzeug (32) bewegt.

8. Verfahren zum Beheizen eines Fahrzeuglenkrads (10) und zum Erfassen einer Lenkradberührung, wobei in eine Umschäumung (20) eines Lenkradkranzes (14) ein erster elektrischer Leiter (22), der eine innere erste Lage (22a) bildet, sowie ein zweiter elektrischer Leiter (22), der eine äußere zweite Lage (22b) bildet, eingebracht ist, mit folgenden Schritten:
- der erste elektrische Leiter (22) wird in einem Heizbetrieb des Fahrzeuglenkrads (10) mit einem Heizstrom von mehreren Ampere beaufschlagt **dadurch gekennzeichnet, dass** der erste elektrische Leiter in einem Sensorbetrieb des Fahrzeuglenkrads (10) auf ein vorgegebenes Potential zur aktiven Abschirmung der zweiten Lage (22b) gelegt wird;
- dass der zweite elektrische Leiter (22) im Sensorbetrieb des Fahrzeuglenkrads (10) als Sensorlage zur kapazitiven Erfassung von Handberührungen genutzt wird; und
dass zumindest
der erste elektrische Leiter abwechselnd in den Heizbetrieb und den Sensorbetrieb geschaltet wird, insbesondere wobei die Zeitintervalle des Heizbetriebs und des Sensorbetriebs Periodendauern von weniger als einer Zehntelsekunde aufweisen.

9. Werkzeug (32) zum Einbringen von elektrischen Leitern (22) in eine Umschäumung (20) eines Lenkradskeletts (18), insbesondere zur Durchführung eines Verfahrens nach einem der vorhergehenden Ansprüche,
wobei das Werkzeug (32) ein Schneidwerkzeug (34) mit einer Schneideinrichtung (36), die eine in Schnittrichtung (S) weisende Schneidkante (38) aufweist, sowie ein Einführwerkzeug (40) für die elektrischen Leiter (22) hat,
wobei das Schneidwerkzeug (34) und das Einführwerkzeug (40) miteinander gekoppelt sind und sich das Einführwerkzeug (40) entgegen der Schnittrichtung (S) vorzugsweise unmittelbar an die Schneideinrichtung (36) anschließt,
**dadurch gekennzeichnet, dass** das Einführwerkzeug (40) wenigstens einen ersten Einführkanal (42a) aufweist, durch den ein erster elektrischer Leiter (22) zur Ausbildung einer ersten Lage (22a) geführt werden kann, und einen zweiten Einführkanal (42b), durch den gleichzeitig ein zweiter elektrischer Leiter (22) zur Ausbildung einer zweiten Lage (22b) geführt werden kann.

10. Werkzeug nach Anspruch 9, **dadurch gekennzeichnet, dass** zur Steuerung einer Schnitttiefe ein taktiles Positionierwerkzeug oder eine berührungslose Sensorsteuerung vorgesehen ist.

11. Fahrzeuglenkrad (10) mit einem Lenkradskelett (18), einem Lenkradkranz (14), der mit einer Umschäumung (20) umschäumt ist, und wenigstens zwei Lagen (22a, 22b von elektrischen Leitern (22), **dadurch gekennzeichnet, dass** in der Umschäumung (20) wenigstens ein Schnitt (26) eingebracht ist, in dem die wenigstens zwei Lagen (22a, 22b) von elektrischen Leitern (22) liegen.

12. Fahrzeuglenkrad nach Anspruch 11, **dadurch gekennzeichnet, dass** der Schnitt (26) Kreuzungspunkte von Abschnitten des Schnitts (26) aufweist, wobei im Bereich der Kreuzungspunkte einer der sich kreuzenden Abschnitte des Schnittes (26) eine größere Tiefe (t) aufweist und die beiden Lagen (22a, 22b) von elektrischen Leitern (22) in diesem Abschnitt des Schnittes (26) tiefer eingelegt sind als die beiden Lagen (22a, 22b) von elektrischen Leitern (22) im darüberliegenden Abschnitt.

## Claims

1. A method for introducing electric conductors (22) into an overmolding (20) of a steering wheel skeleton (18), the electric conductors (22) being used in particular for heating, shielding purposes and for sensing contact on a steering wheel, comprising the following steps:
- introducing at least one cut (26) into the overmolding (20) using a cutting tool (34) in a first method step, **characterized in that**
- simultaneous introduction of both a first layer (22a) of an electric conductor (22) and a second layer (22b) of an electric conductor (22) into the cut (26) that has been created occurs in a second method step.

2. The method according to claim 1, **characterized in that** the first layer (22a) is introduced more deeply into the overmolding (20) than the second layer (22b).

3. The method according to claim 1 or 2, **characterized in that** the first layer (22a) and the second layer (22b) are introduced at a distance of from 0 to 3 mm, preferably from 0.8 to 1.5 mm, from each other.

4. The method according to any one of the preceding claims, **characterized in that** the first layer (22a) and the second layer (22b) are introduced at a substantially constant distance from each other.

5. The method according to any one of the preceding claims, **characterized in that** the first layer (22a) is introduced into a maximum depth of 4 mm, preferably a maximum depth of 2.5 mm.

6. The method according to any one of the preceding claims, **characterized in that** the second layer (22b) is introduced into a depth of from 0 to 1.5 mm.

7. The method according to any one of the preceding claims, **characterized in that** the cut (26) and the introduction of the first layer (22a) and the second layer (22b) of the electric conductors (22) is performed using a tool (32) mounted on a freely programmable industrial robot having at least 3 axes, preferably 6 axes, which moves the tool (32), in particular wherein the steering wheel skeleton (18) is held on a second freely programmable industrial robot having at least 3 axes, preferably 6 axes, which moves the steering wheel skeleton (18) relative to the tool (32).

8. A method for heating a vehicle steering wheel (10) and for sensing a contact on a steering wheel, wherein a first electric conductor (22) forming an inner first layer (22a) as well as a second electric conductor (22) forming an outer second layer (22b) are introduced into an overmolding (20) of a steering wheel rim (14), comprising the following steps:
- during heating operation of the vehicle steering wheel (10), heating current of several amperes is applied to the first electric conductor (22), **characterized in that** during sensor operation of the vehicle steering wheel (10) the first electric conductor is connected to a predetermined potential for active shielding of the second layer (22b),
- that during sensor operation of the vehicle steering wheel (10) the second electric conductor (22) is used as a sensor layer for capacitive sensing of hand contacts; and
- that at least the first electric conductor is alternately switched to the heating operation and to the sensor operation, in particular wherein the time intervals of the heating operation and sensor operation show periods of less than a tenth of a second.

9. A tool (32) for introducing electric conductors (22) into an overmolding (20) of a steering wheel skeleton (18), in particular for implementing a method according to any one of the preceding claims,
wherein the tool (32) has a cutting tool (34) comprising a cutting unit (36) which includes a cutting edge (38) pointing in the cutting direction (S) as well as an inserting tool (40) for the electric conductors (22),
wherein the cutting tool (34) and the inserting tool (40) are coupled to each other and the inserting tool (40) is adjacent preferably directly to the cutting unit (36) against the cutting direction (S),
**characterized in that** the inserting tool (40) has at least a first inserting passage (42a) through which a first electric conductor (22) can be guided for forming a first layer (22a) and a second inserting passage (42b) through which simultaneously a second electric conductor (22) can be guided for forming a second layer (22b).

10. The tool according to claim 9, **characterized in that** a tactile positioning tool or a contactless sensor control is provided for controlling a cut depth.

11. A vehicle steering wheel (10) comprising a steering wheel skeleton (18), a steering wheel rim (14) that is surrounded by an overmolding (20) and at least two layers (22a, 22b) of electric conductors (22), **characterized in that** at least one cut (26), in which the at least two layers (22a, 22b) of electric conductors (22) are located, is introduced into the overmolding (20).

12. The vehicle steering wheel according to claim 11, **characterized in that** the cut (26) has intersections of portions of the cut (26), wherein in the area of the intersections one of the intersecting portions of the cut (26) has a larger depth (t) and the two layers (22a, 22b) of electric conductors (22) are inserted more deeply in said portion of the cut (26) than the two layers (22a, 22b) of electric conductors (22) in the superimposed portion.

## Revendications

1. Procédé pour introduire des conducteurs électriques (22) dans un revêtement en mousse (20) d'une armature de volant (18), pour lequel les conducteurs électriques (22) sont notamment utilisés pour le chauffage, pour le blindage et pour la détection du contact du volant, avec les étapes suivantes :
- réalisation d'au moins une découpe (26) dans le revêtement en mousse (20) au moyen d'un outil de coupe (34) dans une première étape du procédé, **caractérisée en ce que**
- l'introduction simultanée à la fois d'une première couche (22a) d'un conducteur électrique (22) et d'une seconde couche (22b) d'un conducteur électrique (22) dans la découpe (26) réalisée qui a lieu dans une seconde étape du procédé.

2. Procédé selon la revendication 1, **caractérisé en ce que** la première couche (22a) est introduite plus profondément dans le revêtement en mousse (20) que la deuxième couche (22b).

3. Procédé selon la revendication 1 ou 2, **caractérisé en ce que** la première couche (22a) et la deuxième couche (22b) sont introduites à une distance de 0 à 3 mm, de préférence de 0,8 à 1,5 mm, l'une de l'autre.

4. Procédé selon l'une des revendications précédentes, **caractérisé en ce que** la première couche (22a) et la deuxième couche (22b) sont introduites à une distance sensiblement constante l'une de l'autre.

5. Procédé selon l'une des revendications précédentes, **caractérisé en ce que** la première couche (22a) est introduite à une profondeur d'au plus 4 mm, de préférence d'au plus 2,5 mm.

6. Procédé selon l'une des revendications précédentes, **caractérisé en ce que** la deuxième couche (22b) est introduite à une profondeur de 0 à 1,5 mm.

7. Procédé selon l'une des revendications précédentes, **caractérisé en ce que** la découpe (26) et l'introduction de la première couche (22a) et de la deuxième couche (22b) des conducteurs électriques (22) sont réalisées au moyen d'un outil (32) qui est monté sur un robot industriel au moins 3 axes librement programmable, de préférence à 6 axes, lequel déplace l'outil (32), en particulier pour lequel l'armature de volant (18) est maintenue sur un deuxième robot industriel au moins 3 axes librement programmable, de préférence 6 axes, lequel déplace l'armature de volant (18) par rapport à l'outil (32).

8. Procédé pour chauffer un volant de véhicule (10) et pour détecter un contact avec le volant, pour lequel dans un revêtement en mousse (20) d'une jante de volant (14) un premier conducteur électrique (22), lequel forme une première couche intérieure (22a) ainsi qu'un second conducteur électrique (22), lequel forme une seconde couche externe (22b), est introduit selon les étapes suivantes:
le premier conducteur électrique (22) est soumis à un courant de chauffage de plusieurs ampères en mode chauffage du volant de véhicule (10),
**caractérisé en ce que** le premier conducteur électrique sera placé par fonctionnement du capteur du volant de véhicule (10) à un potentiel prédéterminé pour activer l'isolement de la deuxième couche (22b);
**en ce que** le deuxième conducteur électrique (22) sera utilisé en mode capteur du volant de véhicule (10) en tant que position de capteur pour la détection capacitive des touches de la main; et
qu'au moins le premier conducteur électrique sera commuté alternativement en mode chauffage et en mode capteur de contact,
en particulier pour lequel les intervalles de temps entre le mode chauffage et le mode capteur ont des périodes de durée inférieure à un dixième de seconde.

9. Outil (32) pour introduire des conducteurs électriques (22) dans un revêtement en mousse (20) d'une armature de volant (18), en particulier pour mettre en oeuvre un procédé selon l'une des revendications précédentes, pour lequel l'outil (32) est un outil de coupe (34) avec un dispositif de coupe (36), qui a un bord de coupe (38) pointant dans la direction de coupe (S), ainsi qu'un outil d'insertion (40) pour les conducteurs électriques (22), pour lequel l'outil de coupe (34) et l'outil d'insertion (40) sont couplés l'un à l'autre et l'outil d'insertion (40) est de préférence directement relié au dispositif de coupe (36) opposé à la direction de coupe (S)
**caractérisé en ce que** l'outil d'insertion (40) a au moins un premier canal d'insertion (42a) à travers lequel un premier conducteur électrique (22) peut être guidé pour former une première couche (22a), et un deuxième canal d'insertion (42b), à travers lequel simultanément un deuxième conducteur électrique (22) peut être guidé pour former une deuxième couche (22b).

10. Outil selon la revendication 9, **caractérisé en ce qu'**un outil de positionnement tactile ou une commande par capteur sans contact est prévu pour contrôler une profondeur de coupe.

11. Volant de véhicule (10) avec une armature de volant (18), une jante de volant (14) qui est moussée avec un revêtement en mousse (20) et au moins deux couches (22a, 22b) de conducteurs électriques (22), **caractérisé en ce que** dans le revêtement en mousse (20) au moins une découpe (26) est réalisée dans laquelle se trouvent les au moins deux couches (22a, 22b) de conducteurs électriques (22).

12. Volant de véhicule selon la revendication 11, **caractérisé en ce que** la découpe (26) présente des points d'intersection de la section de découpe (26), pour lequel dans la zone des points d'intersection l'une des sections d'intersection de la découpe (26) a une plus grande profondeur (t) et les deux couches (22a, 22b) de conducteurs électriques (22) sont insérées plus profondément dans cette section de découpe (26) que les deux couches (22a, 22b) de conducteurs électriques (22) dans la section se trouvant au-dessus.
